# DEMANDE DE BREVET EUROPEEN

(11) **EP 4 700 913 A1**
(43) Date de publication de la demande: **25.02.2026**
(21) Numéro de dépôt: 25187026.7
(22) Date de dépôt: 02.07.2025
(51) Int. Cl.: H01M 10/613, H01M 10/617, H01M 10/625, H01M 10/647, H01M 10/651, H01M 10/652, H01M 10/6566

(54) **DISPOSITIF DE REFROIDISSEMENT POUR BATTERIE DE VEHICULE AUTOMOBILE ELECTRIQUE OU HYBRIDE**

(30) Priorité: 20.08.2024 FR 2408973
(71) Demandeur: Stellantis Auto SAS, 78300 Poissy (FR); FCA US LLC, Auburn Hills, MI 48326-2766 (US)
(72) Inventeur: BERTHIER, NICOLAS, 78150 LE CHESNAY (FR); NOVATI, JEAN, 78420 CARRIERES SUR SEINE (FR); RICCO, RAFFAELE, 70010 Casamassima (IT)
(74) Mandataire: PSIP

(57) **Abrégé**

L'invention concerne une batterie (130) de véhicule électrique ou hybride. La batterie (130) comporte un conduit d'air (110) et un châssis de cellules de batterie (120). Le conduit d'air (110) comporte une surface d'échange (112) en contact avec le châssis de cellules de batterie (120). Le conduit d'air comporte une entrée d'air présentant une première section (110A) et une sortie d'air présentant une deuxième section (110B). Le conduit d'air (110) présente une diminution de section configurée pour accélérer un flux d'air (F) entre la première section (110A) et la deuxième section (110B). De plus, le conduit d'air peut aussi comporter des saillies (113) favorisant la création de turbulences dans l'écoulement du flux d'air (F). Par ces moyens, le flux d'air (F) refroidit efficacement la batterie (130).

## Description

L'invention concerne les véhicules électriques, c'est-à-dire ceux équipés d'au moins une batterie de stockage d'énergie électrique destinée à leur propulsion. Cela inclut les véhicules disposant d'un unique moyen de propulsion électrique, ainsi que les véhicules hybrides intégrant au moins un mode de propulsion électrique.

Il est connu de l'art antérieur que les batteries chauffent pendant l'utilisation du véhicule. Ainsi, la demande de brevet CN114824564 décrit un dispositif de refroidissement pour un bac de batterie de véhicule automobile électrique. Le bac de batterie comporte des rangées de batteries séparées par des interstices. Le dispositif comporte un réservoir d'injection d'air comprenant une entrée d'air et une sortie d'air. La sortie d'air présente une grille d'aération ouverte sur le bac de batteries. Un flux d'air est introduit dans l'entrée d'air, circule dans le réservoir d'injection d'air et s'échappe par la grille d'aération. De la sorte, le réservoir d'injection d'air injecte le flux d'air dans le bac de batteries. En particulier, le flux d'air circule entre les interstices des batteries. De cette manière, le flux d'air refroidit le bac de batteries par convection thermique. Par ailleurs, une surface du réservoir d'injection d'air est inclinée. La surface inclinée a pour effet pour d'accélérer le flux d'air. Ainsi, le flux d'air refroidit plus efficacement le bac de batteries par convection thermique. Cependant, le flux d'air est accéléré dans le réservoir d'injection d'air et non pas dans le bac de batteries. Ainsi, le flux l'air subit un ralentissement pendant son parcours entre le réservoir d'injection et le bac de batteries. De plus, le flux d'air sortant a un débit limité par la grille de sortie d'air. De surcroît, le flux l'air circule entre les interstices des batteries du bac de batteries. Ainsi, le flux d'air est encore davantage ralenti. Pour les raisons précitées, le flux d'air refroidit moins efficacement le bac de batteries.

L'objectif de la présente invention est de remédier à ces inconvénients et d'améliorer les performances de refroidissement de la batterie du véhicule électrique.

Pour atteindre cet objectif, l'invention propose une batterie de véhicule électrique ou hybride, la batterie présentant un axe longitudinal, la batterie comprenant un conduit d'air et un châssis de cellules de batterie, le conduit d'air comportant une entrée d'air présentant une première section, le conduit d'air comportant une sortie d'air présentant une deuxième section, le conduit d'air étant configuré pour faire circuler un flux d'air de la première section vers la deuxième section, le conduit d'air comportant une surface d'échange fixée au châssis de cellules de batterie, la surface de la première section est plus grande que la surface de la deuxième section.

Cela permet d'accélérer le flux d'air. Par conséquent, le flux d'air refroidit plus efficacement la surface d'échange, et par extension, la batterie. De plus, de cette manière, le flux d'air refroidit de manière plus homogène la batterie. Ainsi, la batterie bénéficie d'une performance et une durabilité améliorées.

Avantageusement, le conduit d'air comporte une paroi en regard de la surface d'échange, la paroi présentant un angle compris entre 20 à 60 degrés par rapport à l'axe longitudinal.

Ceci fournit une géométrie de conduit d'air simple et facile à fabriquer et à monter. De plus, cette inclinaison permet d'avoir plus de contrôle sur l'accélération du flux d'air. Ainsi, le flux d'air refroidit efficacement la batterie.

Avantageusement, la surface de la première section présente une surface 2 à 5 fois plus grande que la surface de la deuxième section.

La diminution de section permet également de mieux contrôler l'accélération du flux d'air. Ainsi, le flux d'air refroidit efficacement la batterie, ce qui se traduit par une amélioration de la performance et de la durabilité de la batterie.

Avantageusement, le conduit d'air comporte des saillies.

Les saillies favorisent la création de turbulences dans l'écoulement du flux d'air dans le conduit. Les turbulences améliorent les capacités de dissipation thermique du flux d'air. Ainsi, le flux d'air refroidit encore plus efficacement la batterie. Par ailleurs, la longueur des saillies peut être déterminée de telle sorte que les saillies ne dépassent pas globalement la moitié de la section du conduit d'air, évitant ainsi de former des saillies excessivement longues.

Avantageusement, les saillies sont des rangées d'ailettes de forme plane.

Les saillies ainsi disposées permettent de diriger le flux d'air de manière plus contrôlée. Par ailleurs, les ailettes de cette forme augmentent significativement la surface de contact avec le flux d'air. Ainsi, les transferts de chaleurs sont plus importants. De ce fait, le flux d'air refroidit plus efficacement la batterie.

Avantageusement, les saillies présentent un angle de 20 à 45 degrés par rapport à l'axe longitudinal.

L'inclinaison des saillies permet d'orienter les turbulences de manière plus contrôlée, améliorant ainsi les capacités de dissipation thermique du flux d'air.

Avantageusement, les saillies sont disposées en aval du flux d'air.

Cela permet de maximiser l'effet des turbulences créées par les saillies rendant les échanges thermiques encore plus efficaces, et permettant à la chaleur de la batterie d'être dissipée efficacement.

Avantageusement, le châssis de cellules de batteries comprend un premier étage et un deuxième étage, l'espace entre le premier étage et le deuxième étage définissant un passage intérieur comprenant le conduit d'air, le châssis de cellules de batterie présentant une première extrémité longitudinale et une deuxième extrémité longitudinale, la première extrémité longitudinale comportant la première section et la deuxième extrémité longitudinale comportant la deuxième section, la surface d'échange étant fixée au premier étage.

Ainsi, le conduit d'air passe à l'intérieur de la batterie. Cela permet de refroidir la batterie de manière plus homogène. En effet, avec cette configuration, on évite plus facilement l'apparition de points chauds à l'intérieur du châssis de cellule de batterie.

Avantageusement, la batterie comporte un conduit additionnel, le passage intérieur comprenant le conduit additionnel, le conduit d'air additionnel comportant une entrée d'air présentant une première section additionnelle, le conduit d'air additionnel comportant une sortie d'air présentant une deuxième section additionnelle, le conduit d'air additionnel étant configuré pour faire circuler le flux d'air de la première section additionnelle vers la deuxième section additionnelle, la première extrémité longitudinale comportant la première section additionnelle et la deuxième extrémité longitudinale comportant la deuxième section additionnelle, le conduit d'air additionnel comportant une surface d'échange additionnelle fixée au deuxième étage.

Cela permet d'ajouter des surfaces d'échange supplémentaires avec le châssis de cellules de batterie. De cette manière, le refroidissement de la batterie est plus efficace.

L'invention concerne également un véhicule électrique ou hybride comprenant une batterie telle que définie précédemment.

L'invention sera davantage détaillée par la description de modes de réalisation non limitatifs, et sur la base des figures annexées illustrant des variantes de l'invention, dans lesquelles :
- [Fig.1] illustre schématiquement une vue en coupe longitudinale d'une batterie, selon un premier mode de réalisation de l'invention ;
- [Fig. 2] illustre schématiquement une vue en coupe longitudinale d'une batterie comprenant un châssis de cellules de batteries traversé par deux conduits d'air, selon un deuxième mode de réalisation de l'invention.

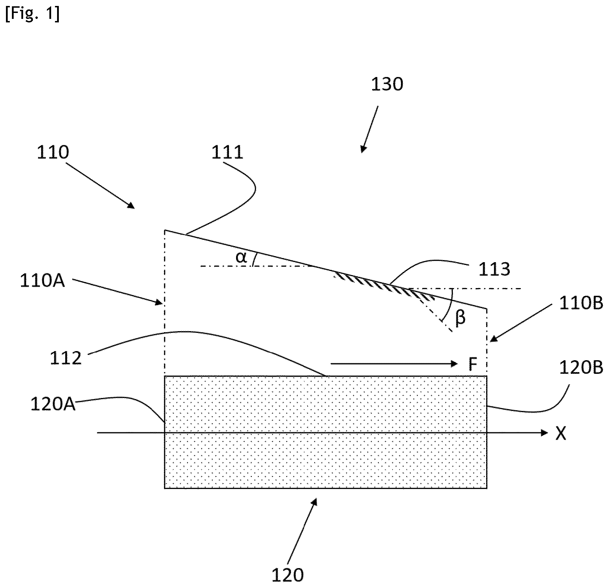

La figure 1 illustre une batterie 130 de véhicule électrique ou hybride comprenant un conduit d'air 110 et un châssis de cellules de batterie 120 selon un premier mode de réalisation de l'invention. La batterie 120 présente un axe longitudinal X. Le conduit d'air 110 est fixé au châssis de cellules de batterie 120. Le conduit d'air 110 est apposé sur le châssis de cellules de batterie 120. Ainsi, le conduit d'air 110 présente une surface d'échange 112 définissant la surface où le conduit d'air 110 et le châssis de cellules de batterie 120 sont en contact. Par ailleurs, la surface d'échange 112 a une forme plane contenue dans un plan longitudinal parallèle à l'axe longitudinal X.

Le conduit d'air 110 est configuré pour faire circuler un flux d'air F. Le flux d'air F refroidit par convection thermique la surface d'échange 112. Par extension, le flux d'air F refroidit la batterie 130.

Le conduit d'air 110 s'étend entre une première section 110A et une deuxième section 110B. La première section 110A communique avec un passage d'air. De cette manière, le passage d'air injecte un flux d'air dans le conduit d'air. La deuxième section 110B communique avec une évacuation d'air. De la sorte, l'évacuation d'air évacue le flux d'air à l'extérieur du véhicule. La première section 110A est une entrée d'air. La deuxième section 110B est une sortie d'air. Ainsi, le flux d'air F peut circuler dans le conduit d'air 110. En particulier, le flux d'air F circule de la première section 110A vers la deuxième section 110B.

Dans la suite, les termes « amont » et « aval » sont définis par rapport au sens de l'écoulement du flux d'air F. Ainsi, l'amont désigne le côté d'où provient le flux d'air F, c'est-à-dire du côté du passage d'air. A contrario, l'aval désigne le côté vers lequel le flux d'air F se dirige, c'est-à-dire du côté de l'évacuation d'air. Ainsi, le flux d'air F circule de l'amont vers l'aval du conduit d'air 110.

La première section 110A et la deuxième section 110B sont perpendiculaires à l'axe longitudinal X. Selon une variante, la première section ou la deuxième section peuvent être disposées de manière oblique à l'axe longitudinal X. Dans ce cas, la première section 110A ou la deuxième section 110B forment un angle par rapport à l'axe longitudinal compris entre 0 degré et 90 degrés exclu.

Le châssis de cellules de batterie 120 s'étend selon la direction de l'axe longitudinal X. Le châssis de cellules de batterie 120 comprend une première extrémité longitudinale 120A disposée en amont et une deuxième extrémité longitudinale 120B disposée en aval. La première extrémité longitudinale 120A appartient à un premier plan perpendiculaire à l'axe longitudinal X. La deuxième extrémité longitudinale 120B appartient à un deuxième plan perpendiculaire à l'axe longitudinal X. La première section 110A est disposée dans le premier plan. La deuxième section 110B est disposée dans le deuxième plan. Ainsi, la surface d'échange 112 s'étend sur toute la longueur du châssis de cellules de batterie 120 suivant l'axe longitudinal X. De ce fait, le rapport entre la surface d'échange 112 et la longueur du conduit d'air est maximisé. De cette manière, le flux d'air F refroidit efficacement la batterie 130 par rapport à l'encombrement de la batterie 130.

Selon une variante, la première section 110A est disposée dans un troisième plan perpendiculaire à l'axe longitudinal X. Le troisième plan est situé plus en aval de l'axe longitudinal X que le premier plan. Selon une autre variante, la première section 110A est disposée dans un quatrième plan perpendiculaire à l'axe longitudinal X. Le quatrième plan est situé plus en amont de l'axe longitudinal X. Dans les deux cas, le châssis de cellules de batterie 120 comporte une portion qui n'est pas en contact avec le conduit d'air 110. Cela a pour effet de minimiser davantage l'encombrement du conduit d'air 110.

Le châssis de cellules de batterie 120 comprend des cellules de batterie. Par ailleurs, les cellules de la batterie 130 sont séparées par des interstices. De préférence, le matériau du châssis de cellules de batterie est en aluminium. En outre, la surface d'échange 112 ferme hermétiquement le châssis de cellules de batterie 120. De cette manière, le flux d'air F ne passe pas dans les interstices. Par conséquent, cela évite de devoir filtrer ou d'assécher le flux d'air F.

De plus, les cellules de la batterie 130 sont immergées dans un liquide diélectrique. Le liquide diélectrique permet d'homogénéiser la température des cellules de la batterie 130. En particulier, cela évite les différences de température entre les cellules de la batterie 130, qui entraînent des performances inégales entre les cellules de la batterie 130 et un vieillissement prématuré des cellules de la batterie 130. De surcroît, le liquide diélectrique réduit les risques de courts-circuits entre les cellules de la batterie 130. Ainsi, le liquide diélectrique ajoute une sécurité supplémentaire à la batterie 130, et améliore la durabilité et les performances de la batterie 130.

Comme vu auparavant, pendant l'utilisation du véhicule, les cellules de batterie génèrent une certaine quantité de chaleur. En particulier, la quantité de chaleur générée est reçue en partie par la surface d'échange 112. En circulant dans le conduit d'air 110, le flux d'air F extrait la quantité de chaleur générée par convection sur la surface d'échange 112.

Le flux d'air F refroidit la surface d'échange 112. Par extension, le fluide diélectrique est refroidi. Le fluide diélectrique homogénéise le refroidissement dans le châssis de cellules de batterie 120. De la sorte, le châssis de cellules de batterie 120 et, *in extenso,* la batterie 130 sont refroidis. Ainsi, la surface d'échange 112 définit une surface d'échange thermique entre le flux d'air F et le châssis de cellules de batteries 120.

À cause de l'échange thermique, le flux d'air F s'échauffe suivant le sens de l'axe longitudinal X. Le flux d'air F chauffé est ensuite évacué dans l'évacuation d'air. Ainsi, la quantité de chaleur générée est dispersée à l'extérieur de la batterie 130.

La première section 110A et la deuxième section 110B présentent respectivement une première surface et une deuxième surface. La première surface est deux fois plus grande que la deuxième section. Ainsi, le conduit d'air 110 comporte nécessairement au moins une diminution de section entre la première section 110A et la deuxième section 110B. Le conduit d'air comporte une paroi 111 formant, selon une vue en coupe, un premier angle par rapport à l'axe longitudinal X. La paroi présente une forme plane. La paroi 111 s'étend entre la première section 110A et la deuxième section 110B. De plus, la paroi est située en regard de la surface d'échange 112. La paroi 111 forme, selon une vue axiale définie par l'axe longitudinal X et un plan transverse à l'axe longitudinal X, un deuxième angle par rapport au plan longitudinal. Le premier angle est d'environ 30 degrés et le deuxième angle est d'environ 0 degré. Le premier angle permet de mieux contrôler le différentiel de température entre l'amont et l'aval du flux d'air. Le deuxième angle permet d'améliorer le contrôle sur les parties de la batterie à refroidir davantage.

Selon une variante, le premier angle est compris entre 20 degrés et 60 degrés, et le deuxième angle est sensiblement de 0 degré. Selon une autre variante, la diminution de section présente une forme concave en vue de coupe et le deuxième angle est de 0 degré. Selon une autre variante, la diminution de section présente une forme concave en vue de coupe et le deuxième angle est sensiblement de 0 degré. La forme concave permet de mieux contrôler l'accélération du flux d'air dans le conduit d'air 110.

Grâce à la diminution de section, le flux d'air F atteint une vitesse plus grande en aval qu'en amont. De ce fait, la température du flux d'air F est plus homogène dans tout le passage d'air. Par conséquent, le flux d'air F refroidit la batterie 130 de manière plus homogène. Ce faisant, de manière générale, la batterie 130 subit des contraintes thermiques plus petites. De la sorte, la batterie bénéficie d'une durée de vie prolongée et une efficacité énergétique accrue.

Aussi grâce à la diminution de section, le flux d'air F refroidit la batterie 130 de manière plus efficace, car le transfert thermique en aval de la surface d'échange est plus important. Ainsi, la quantité de chaleur générée extraite de la batterie 130 est plus grande. Bien entendu, on peut envisager d'autres variantes selon lesquelles la première surface est trois, quatre, voire cinq fois plus grande que la deuxième surface. Dans ce cas, les deux effets précités quant à la diminution de section seront d'autant plus accentués.

Selon une variante, le flux d'air F présente un écoulement laminaire. Selon une variante, le flux d'air F présente un écoulement turbulent. L'écoulement turbulent permet un transfert de chaleur est plus élevé par rapport à un écoulement laminaire. Ainsi, l'écoulement turbulent du flux d'air F refroidit la batterie 130 de manière plus efficace.

Le conduit d'air 110 peut comporter de saillies 113. Les saillies peuvent être des rangées d'ailettes. Les saillies 113 sont disposées en aval de la paroi 111. En vue de coupe, les saillies forment un angle d'inclinaison de saillie par rapport à l'axe longitudinal X. L'angle d'inclinaison de saillie est compris entre 20 et 45 degrés par rapport à l'axe longitudinal X. Les rangées d'ailettes ont une longueur comprise entre 5 cm et 15 cm. Selon une variante, les saillies 113 sont disposées sur la paroi 111. Les saillies 113 ont pour effet de perturber l'écoulement du flux d'air F. Ainsi, les saillies favorisent la création de turbulences dans le flux d'air F. De ce fait, les saillies participent à améliorer le refroidissement de la batterie 130 par le flux d'air F.

Selon une variante, on peut envisager que la surface d'échange 112 comporte des saillies parallèles à l'axe longitudinal X. Les ailettes augmentent la surface d'échange 112 et ne font pas obstacle au flux d'air F. Ainsi, le flux d'air F refroidit plus efficacement la batterie 130.

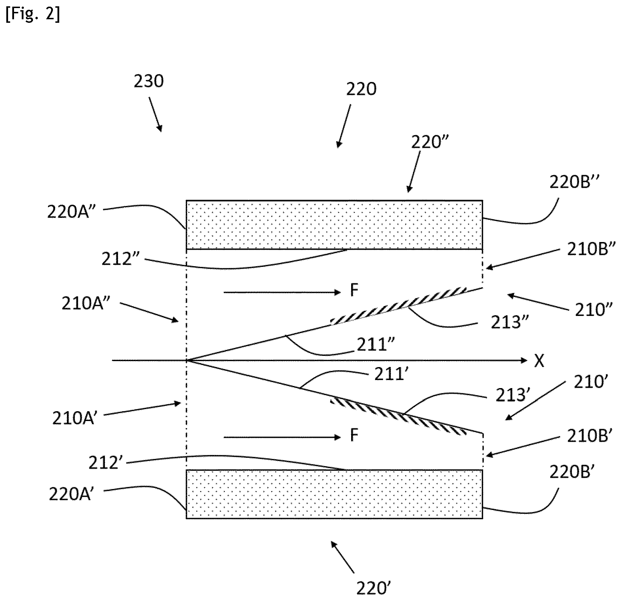

Dans le deuxième mode de réalisation représenté à la figure 2, le châssis de cellules de batterie 220 comporte un premier étage 220' et un deuxième étage 220''. La batterie 230 comporte un premier conduit d'air 210' et un deuxième conduit d'air 210". Le premier conduit d'air 210' et le deuxième conduit d'air 210" passent à travers la batterie 230. Le premier conduit d'air 210' et le deuxième conduit d'air 210" possèdent respectivement une entrée d'air présentant une première section 210A', 210A" et une sortie d'air présentant une deuxième section 210B', 210B". Ainsi, la première extrémité longitudinale 220A', 220A" et la deuxième extrémité longitudinale 220B', 220B" comportent respectivement la première section 210A', 210A" et la deuxième section 210B', 210B". De la sorte, le premier conduit d'air 210' possède une première surface d'échange 212' en contact avec le premier étage 220'. Le deuxième conduit d'air 210" possède une deuxième surface d'échange 212" en contact avec le deuxième étage 220". De cette manière, la batterie 230 présente des surfaces d'échange thermique supplémentaires. Par conséquent, le refroidissement de la batterie est plus efficace.

Selon une variante non illustrée, un conduit d'air passe à travers le châssis de cellules de batterie. Ainsi, la première extrémité longitudinale comporte la première section. De façon similaire, la deuxième extrémité longitudinale comporte la deuxième section. La surface d'échange peut être en contact avec le premier étage ou le deuxième étage. La surface d'échange est une surface d'échange thermique entre le conduit d'air et le châssis de cellules de batterie. De cette manière, on minimise l'encombrement entre le premier étage et le deuxième étage de la batterie.

Dans un troisième mode de réalisation non illustré, on peut envisager un premier conduit d'air et un deuxième conduit d'air passant à travers le châssis de cellules de batterie, comme vu dans le deuxième mode de réalisation. Dans ce cas, le premier conduit d'air et le deuxième conduit d'air partagent respectivement une première surface d'échange avec le premier étage et une deuxième surface d'échange avec le deuxième étage du châssis de cellules de batterie. En plus de cela, on peut envisager d'apposer un troisième conduit d'air sur le premier étage. De ce fait, le troisième conduit d'air partage une troisième surface d'échange avec le premier étage du châssis de batterie. De cette façon, on maximise les surfaces d'échange disponibles avec la batterie. Ainsi, le flux d'air F refroidit encore plus efficacement la batterie. Selon une variante, on peut bien entendu envisager que le troisième conduit d'air est apposé sur le deuxième étage du châssis de batterie.

## Revendications

1. Batterie (130, 230) de véhicule électrique ou hybride, la batterie (130, 230) présentant un axe longitudinal (X), la batterie (130, 230) comprenant un conduit d'air (110, 210', 210") et un châssis de cellules de batterie (120, 220), le conduit d'air (110, 210', 210") comportant une entrée d'air présentant une première section (110A, 210A', 210A"), le conduit d'air (110, 210', 210") comportant une sortie d'air présentant une deuxième section (110B, 210B', 210B"), le conduit d'air (110, 210', 210") étant configuré pour faire circuler un flux d'air (F) de la première section (110A, 210A', 210A") vers la deuxième section (110B, 210B', 210B"), le conduit d'air (110, 210', 210") comportant une surface d'échange (112, 212', 212") fixée au châssis de cellules de batterie (120, 220), la batterie (130, 230) étant **caractérisée en ce que** la surface de la première section (110A, 210A', 210A") est plus grande que la surface de la deuxième section (110B, 210B', 210B").

2. Batterie (130, 230) selon la revendication 1, **caractérisée en ce que** le conduit d'air (110, 210', 210") comporte une paroi (111, 211', 211") en regard de la surface d'échange (112, 212', 212"), la paroi (111, 211', 211") présentant un angle (α) compris entre 20 à 60 degrés par rapport à l'axe longitudinal (X).

3. Batterie (130, 230) selon l'une quelconque des revendications 1 à 2, **caractérisée en ce que** la surface de la première section (110A, 210A', 210A") présente une surface 2 à 5 fois plus grande que la surface de la deuxième section (110B, 210B', 210B").

4. Batterie (130, 230) selon l'une quelconque des revendications 1 à 3, **caractérisée en ce que** le conduit d'air (110, 210', 210") comporte des saillies (113, 213', 213").

5. Batterie (130, 230) selon la revendication 4, **caractérisée en ce que** les saillies (113, 213', 213") sont des rangées d'ailettes de forme plane.

6. Batterie (130, 230) selon la revendication 5, **caractérisée en ce que** les saillies (113, 213', 213") présentent un angle (B) de 20 à 45 degrés par rapport à l'axe longitudinal (X).

7. Batterie (130, 230) selon l'une quelconque des revendications 4 à 6, **caractérisée en ce que** les saillies (113, 213', 213") sont disposées en aval du flux d'air (F).

8. Batterie (230) selon l'une quelconque des revendications 1 à 7, **caractérisée en ce que** le châssis de cellules de batteries (220) comprend un premier étage (220') et un deuxième étage (220"), l'espace entre le premier étage (220') et le deuxième étage (220") définissant un passage intérieur comprenant le conduit d'air (210'), le châssis de cellules de batterie (220) présentant une première extrémité longitudinale (220A', 220A") et une deuxième extrémité longitudinale (220B', 220B"), la première extrémité longitudinale (220A') comportant la première section (210A') et la deuxième extrémité longitudinale (220B') comportant la deuxième section (210B'), la surface d'échange (212') étant fixée au premier étage (220').

9. Batterie (230) selon la revendication 8, **caractérisée en ce que** la batterie (230) comporte un conduit additionnel (210"), le passage intérieur comprenant le conduit additionnel (210"), le conduit d'air additionnel (210") comportant une entrée d'air présentant une première section additionnelle (210A"), le conduit d'air additionnel (210") comportant une sortie d'air présentant une deuxième section additionnelle (210B"), le conduit d'air additionnel (210") étant configuré pour faire circuler le flux d'air (F) de la première section additionnelle (210A") vers la deuxième section additionnelle (210B"), la première extrémité longitudinale (220A") comportant la première section additionnelle (210A") et la deuxième extrémité longitudinale (220B") comportant la deuxième section additionnelle (210B"), le conduit d'air additionnel (210") comportant une surface d'échange additionnelle (212") fixée au deuxième étage (220").

10. Véhicule électrique ou hybride comprenant une batterie (130, 230) de véhicule électrique selon l'une quelconque des revendications 1 à 9.
